**Europäisches Patentamt**

(19) **European Patent Office**

**Office européen des brevets**

(11) Veröffentlichungsnummer: **0 068 229**
B1

(12) **EUROPÄISCHE PATENTSCHRIFT**

(45) Veröffentlichungstag der Patentschrift:
21.08.85

(21) Anmeldenummer: 82105115.8

(22) Anmeldetag: 11.06.82

(51) Int. Cl.⁴: **A 23 L 1/36**, A 23 G 1/00, A 21 D 2/36

(54) Verfahren zur Gewinnung von Nahrungsfasern für die Verbesserung der verdauungsfördernden Eigenschaften von Nahrungs- und Genussmitteln.

(30) Priorität: 26.06.81 DE 3125144

(43) Veröffentlichungstag der Anmeldung:
05.01.83 Patentblatt 83/1

(45) Bekanntmachung des Hinweises auf die Patenterteilung:
21.08.85 Patentblatt 85/34

(84) Benannte Vertragsstaaten:
AT BE CH FR GB IT LI LU NL SE

(56) Entgegenhaltungen:
DE - A - 2 910 539
DE - C - 406 752

B.W. MINIFIE: "Chocolate, Cocoa and Confectionery: Science and Technology", 1970, J & A Churchill, London (GB), Seite 32
H. FINCKE: "Handbuch der Kakaoerzeugnisse", 1965, Springer Verlag, Berlin (DE), Seiten 54-56

(73) Patentinhaber: Lindt & Sprüngli AG, Seestrasse 204, CH-8802 Kilchberg (CH)

(72) Erfinder: Kleinert, Jürg, Dr. Ing., Seestrasse 238, CH-8038 Zürich (CH)

(74) Vertreter: Patentanwälte Dipl.-Ing. Rudolf Bibrach Dipl.-Ing. Elmar Rehberg, Pütterweg 6 Postfach 738, D-3400 Göttingen (DE)

**Beschreibung**

Die Erfindung betrifft ein Verfahren zur Gewinnung von Nahrungsfasern für die Verbesserung der verdauungsfördernden Eigenschaften von Nahrungs- und Genußmitteln. Die bis heute hierfür in Vorschlag gebrachten Stoffe, wie Kleie, Carboxylmethylcellulose oder pektingeschichtete Cellulose, als unverdauliche Ballaststoffe zuzusetzen, sind in struktureller Hinsicht unbefriedigend. Das Gleiche gilt für Nähr- und Genußmittel aus Kakaoschalen durch Behandlung mit einer Zuckerlösung und nachfolgende Rösten gemäß DE-PS 406 752. Ebenso wurde von M. Bekker, Handbuch der Futtermittel 1965, empfohlen, Kakaoschalen zur Viehfütterung zu verwenden. Dabei zeigten sich jedoch Erkrankungen der Tiere, die eine Verwendung für die menschliche Ernährung von vornherein ausschlossen. Die Veröffentlichung von B. W. Minifie in »Chocolate, Cocoa and Confectionery-Science and Technologig, Seite 32 stellt Kakaoschalenpulver wegen des hohen Cellulosegehaltes als ein für die menschliche Ernährung ungeeignetes Material heraus. Lediglich A. Finke, Handbuch der Kakaoerzeugnisse, 2. Auflage 1965 beschreibt, daß in gewissen Gebieten, wie Ceylon, Borneo, Java u. a. m. Kakaobohnen zwecks Schönung ihres Aussehens einem Waschprozeß unterzogen werden, was aber mit der Nutzung von Kakaoschalen zur Herstellung von Nahrungsfasern als Zusatz zu Nahrungs- und Genußmitteln nichts zu tun hat.

Aufgabe der Erfindung ist es vielmehr, ein Verfahren zu schaffen, mit welchem erreicht wird, durch Zusatz geeigneter unverdaulicher Ballaststoffe, sog. Nahrungsfasern, bei allen Arten von Nahrungs- und Genußmitteln, wie z. B. Teigwaren, Brot, Bisquits, Snacks, Wurstwaren, Schokoladen, Konditoreierzeugnissen usw., deren Verhalten im menschlichen Verdauungstrakt zu verbessern und gleichzeitig die daraus zu assimilierenden Kalorien zu reduzieren.

Dies wird erfindungsgemäß erreicht, indem Samenschalen der Kakaobohnen einer Nachreinigung mit anschließendem Spülen mit Wasser und Trocknen unterzogen, zerkleinert und zu Pulver zermahlen und den Nahrungs- und Genußmitteln zugesetzt werden. Da sich Kakaoschalen zur Hauptsache aus Rohfasern, Roheiweiß, Mineralstoffen, Pentosane, Fett u. a. m. zusammensetzen, sind diese zur Gewinnung von Nahrungsfasern für die Verbesserung der verdauungsfördernden Eigenschaften von Nahrungs- und Genußmitteln besonders geeignet. Sie weisen ein sehr festes Celluloseskelett auf, das im Unterschied zu Kleie, Carboxylmethylcellulose, modifizierten Stärken u. a. m. in Gegenwart von Wasser nicht weich und schmierig wird. Aus diesem Grunde bilden die aus den Kakaoschalen hergestellten Nahrungsfasern beispielsweise auch einen idealen Zusatzstoff zur Herstellung von Snack-Erzeugnissen nach der Extruder-Verfahrenstechnik.

Die Zusatzmenge an solchen erfindungsgemäß hergestellten Nahrungsfasern variiert je nach dem Nahrungs- und Genußmittel zwischen 5 bis 20%.

Vorzugsweise wird die Naßreinigung der rohen Kakaobohnen mit anschließendem Spülen mit Wasser vor dem Rösten durchgeführt und die Trocknung mit dem Röstprozeß kombiniert (Naßröstung). Vor oder im Anschluß an das Pulverisieren kann ein Desodorieren erfolgen, das unter normalen Druckvehältnissen oder unter Vakuum, vorzugsweise durch Einleiten von überhitztem Dampf oder eines Gases ausgeführt werden kann.

Schließlich können mit dem Spülwasser oder nach dem letzten Spülvorgang aromagebende Stoffe zugesetzt werden, wie z. B. Zimt, Muskat od. dgl.

Die gereinigten und aromatisierten Samenschalen können vor oder nach der Vermahlung zu Nahrungsfasern zwecks Auflockerung der Struktur einer Hitzebehandlung, vorzugsweise in Form eines Toastprozesses, unterzogen werden. Den gereinigten und aromatisierten Nahrungsfasern können Stärke und/oder Zuckerlösungen zugesetzt werden. Die gereinigten und aromatisierten Samenschalen oder die nach deren Vermahlung gebildeten Nahrungsfasern können einer Infrarotbestrahlung ausgesetzt bzw. sterilisiert werden. Ebenso ist es möglich, daß die gereinigten und aromatisierten Samenschalen oder die daraus gebildeten Nahrungsfasern gefärbt oder entfärbt werden.

Zur Optimierung des Verhaltens im menschlichen Verdauungstrakt können die Nahrungsfasern mit spezifischen Mineralstoffen und/oder Salzen, wie beispielsweise Natriumchlorid, Calziumkarbonat od. dgl. angereicht werden.

Zweckmäßig gelangt für die Durchführung des Verfahrens eine Anlage zur Anwendung, bei der einem Bunker für die zur Verarbeitung gelangenden Samenschalen von Kakaobohnen eine Wasch- und Trockenanlage nachgeschaltet ist, an welche sich eine Samenschalen-Vorzerkleinerung und eine Samenschalen-Mikropulverisier- und Sichtanlage anschließt, die ihrerseits mit einem Nahrungsfaserbunker zusammengeschaltet ist, aus welchem das Nahrungsfaserpulver sackweise nach Bedarf entnommen werden kann.

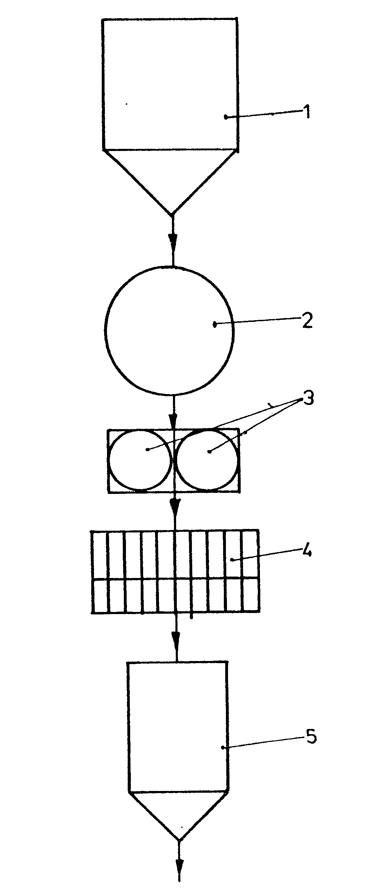

In der Zeichnung ist das Schema einer solchen Anlage wiedergegeben. Die Samenschalen des Kakaos werden nach dem Abtrennen der Kakaoblätter in einem Silo 1 untergebracht, an welchem sich eine Wasch-, Spül- und Trocknungsanlage anschließt. In dieser werden die den Schalen anhaftenden Fruchtmusreste sowie andere Fremdstoffe, Pestizide usw. durch Waschen in heißem Wasser zweckmäßig in einer rotierenden Horizontaltrommel entfernt. Vorzugsweise gelangt eine Trommel mit etwa 2 mm großen Löchern zur Anwendung, die dann mit etwa 75" C heißem Wasser überschichtet wird. Die Trommel arbeitet nach Art eines Waschautomaten mit periodischem Drehsinn, so daß anhaftende Fruchtmusreste und Unreinigkeiten abgespült werden. Nach beendetem Waschprozeß wird das schmutzige Wasser abgezogen. Die Kakaoschalen werden abgeschleudert und vorgetrocknet. Anschließend kann ein Klarspülen mit heißem Wasser erfolgen. Nach erneutem Abschleudern des Wassers werden die so gereinigten Kakaoschalen entweder in der gleichen Trommel oder einer speziellen Trocknungsanlage auf eine Restfeuchtigkeit von etwa 6% getrocknet, so daß eine Schimmelpilzbildung bei der weiteren Lagerung vermieden wird.

Anschließend gelangen die Samenschalen in eine Vorzerkleinerungseinrichtung 3 und darauf in eine Mikropulverisier- und Sichtanlage 4. Die gereinigten und getrockneten Samenschalen werden dann nach einem Zweistufenverfahren durch Vor- und Feinzerkleinerer zu einem Nahrungsfaserpulver vermahlen.

Als Vorzerkleinerer kann beispielsweise eine Hammer- oder Schlagleistenmühle eingesetzt werden. Für die Feinzerkleinerung wird zweckmäßig eine Spezialmühle eingesetzt, in welcher die Schalen zu einem sehr feinen Nahrungsfaserpulver vermahlen werden, welches dann in einen Faserbunker 5 gelangt, aus welchem es in Portionen abgenommen und der weiteren Verarbeitung zugeführt werden kann. Dies erfolgt unter Beachtung der Nahrungsmittelrezepturen und einschlägigen Vorschriften für die Erstellung der jeweiligen Nahrungs- und Genußmittel.

## Patentansprüche

1. Verfahren zur Gewinnung von Nahrungsfasern für die Verbesserung der verdauungsfördernden Eigenschaften von Nahrungs- und Genußmitteln, dadurch gekennzeichnet, daß Samenschalen der Kakaobohnen einer Naßreinigung mit anschließendem Spülen mit Wasser und Trocknen unterzogen, zerkleinert und zu Pulver zermahlen und den Nahrungs- und Genußmitteln zugesetzt werden.

2. Verfahren nach Anspruch 1, dadurch gekennzeichnet, daß die Naßreinigung der rohren Kakaobohnen mit anschließendem Spülen mit Wasser vor dem Rösten durchgeführt und die Trocknung mit dem Röstprozeß kombiniert wird (Naßröstung).

3. Verfahren nach Anspruch 1, dadurch gekennzeichnet, daß vor oder im Abschluß an das Pulverisieren ein Desodorieren erfolgt.

4. Verfahren nach Anspruch 3, dadurch gekennzeichnet, daß das Desodorieren unter normalen Druckverhältnissen oder unter Vakuum erfolgt.

5. Verfahren nach Anspruch 3, dadurch gekennzeichnet, daß das Desodorieren durch Einleiten von überhitztem Dampf oder eines Gases erfolgt.

6. Verfahren nach Anspruch 1 und 2, dadurch gekennzeichnet, daß mit dem Spülwasser oder nach dem letzten Spülvorgang aromagebende Stoffe zugesetzt werden.

7. Verfahren nach Anspruch 6, dadurch gekennzeichnet, daß die gereinigten und aromatisierten Samenschalen vor oder nach der Vermahlung zu Nahrungsfasern einer Hitzebehandlung unterzogen werden.

8. Verfahren nach Anspruch 6, dadurch gekennzeichnet, daß den gereinigten und aromatisierten Nahrungsfasern Stärke und/oder Zuckerlösungen zugesetzt werden.

9. Verfahren nach Anspruch 6, dadurch gekennzeichnet, daß die gereinigten und aromatisierten Samenschalen oder die nach deren Vermahlung gebildeten Nahrungsfasern einer Infrarotbestrahlung ausgesetzt bzw. sterilisiert werden.

10. Verfahren nach Anspruch 6, dadurch gekennzeichnet, daß die gereinigten und aromatisierten Samenschalen oder die nach der Vermahlung zu Pulver gebildeten Nahrungsfasern gefärbt oder entfärbt werden.

11. Verfahren nach Anspruch 6, dadurch gekennzeichnet, daß die gereinigten und aromatisierten Nahrungsfasern mit spezifischen Mineralstoffen und/oder Salzen zur Optimierung des Verhaltens im menschlichen Verdauungstrakt angereichert werden.

## Claims

1. Method for the production of food fibres for the improvement of the digestion-promoting properties of foodstuffs and fine foods, characterised thereby, that seed shells of cocoa beans are subjected to a wet cleaning with subsequent rinsing with water and drying, comminuted and ground to a powder and added to the foodstuffs and fine foods.

2. Method according to claim 1, characterisied thereby, that the wet cleaning of the raw cocoa beans with subsequent rinsing with water is performed before the roasting and the drying is combined with the roasting process (wet roasting).

3. Method according to claim 1, characterised thereby, that a deodorising takes place before or after the pulverising.

4. Method according to claim 3, characterised thereby, that the deodorising takes place under normal pressure conditions or under vacuum.

5. Method according to claim 3, characterised thereby, that the deodorising takes place through introduction of superheated steam or a gas.

6. Method according to claim 1 and 2, characterised thereby, that aromatic substances are added with the rinsing water or after the last rinsing operation.

7. Method according to claim 6, characterised thereby, that the cleaned and aromatised seed shells are subjected to a heat treatment before or after the grinding into food fibres.

8. Method according to claim 6, characterised thereby, that starch and/or sugar solutions are added to the cleaned and aromatised food fibres.

9. Method according to claim 6, characterised thereby, that the cleaned and aromatised seed shells or the food fibres formed after their grinding are sterilised or exposed to an infrared irradiation.

10. Method according to claim 6, characterised thereby, that the cleaned and aromatised seed shells or the food fibres formed after the grinding into powder are coloured or decoloured.

11. Method according to claim 6, characterised thereby, that the cleaned and aromatised food fibres are enriched with specific mineral substances and/or salts for optimisation of the behaviour in the human digestive tract.

## Revendications

1. Procédé d'obtention de fibres alimentaires pour l'amélioration des propriétés digestives d'aliments et de produits d'épicerie fine, caractérisé en ce que des coques de fèves de cacao sont soumises à un nettoyage par voie humide, suivi d'un rinçage à l'eau et d'un séchage et qu'elles sont broyées, moulues en poudre et ajoutées aux aliments et aux produits d'épicerie fine.

2. Procédé suivant la revendication 1, caractérisé en ce que le nettoyage des fèves de cacao brutes par voie humide, suivi du rinçage à l'eua, est exécuté avant la torréfaction et que le séchage est combiné au cycle de torréfaction (torréfaction par voie humide).

3. Procédé suivant la revendication 1, caractérisé en ce qu'avant ou après la pulvérisation, il se produit une désodorisation.

4. Procédé suivant la revendication 3, caractérisé en ce que la désodorisation se produit dans des conditions de pression normales ou sous vide.

5. Procédé suivant la revendication 3, caractérisé en ce que la désodorisation s'exécute par introduction de vapeur surchauffée ou d'un gaz.

6. Procédé suivant une des revendications 1 et 2, caractérisé en ce que des substances aromatiques sont ajoutées avec l'eau de rinçage ou après la dernière opération de rinçage.

7. Procédé suivant la revendication 6, caractérisé en ce que les coques de fèves nettoyées et aromatisées sont soumises, avant ou après leur broyage en fibres alimentaires, à un traitement par la chaleur.

8. Procédé suivant la revendication 6, caractérisé en ce qu'on ajoute aux fibres alimentaires nettoyées et aromatisées de l'amidon et/ou des solutions de sucre.

9. Procédé suivant la revendication 6, caractérisé en ce que les coques de fèves nettoyées et aromatisées ou les fibres alimentaires obtenues après le broyage de celles-ci sont soumises à un rayonnement infrarouge et/ou stérilisées.

10. Procédé suivant la revendication 6, caractérisé en ce que les coques de fèves nettoyées et aromatisées ou les fibres alimentaires transformées en poudre après le broyage sont colorées ou décolorées.

11. Procédé suivant la revendication 6, caractérisé en ce que les fibres alimentaires nettoyées et aromatisées sont enrichis avec des substances minéralles et/ou des sels pour optimaliser des réactions dans l'appareil digestif humain.